# EUROPEAN PATENT APPLICATION

(11) **EP 4 556 585 A1**
(43) Date of publication of application: **21.05.2025**
(21) Application number: 24207038.1
(22) Date of filing: 16.10.2024
(51) Int. Cl.: C22B 3/22, C22B 3/42, C22B 7/00, C22B 26/12, C01D 15/02, C01D 15/08, C22B 1/02, B01D 61/02

(54) **LITHIUM RECOVERY SYSTEM FOR BLACK MASS**

(30) Priority: 20.11.2023 KR 20230161085
(71) Applicant: Doosan Enerbility Co., Ltd., Seongsan-gu Changwon-si, Gyeongsangnam-do 51711 (KR)
(72) Inventor: You, Jang Yong, Suwon-si (KR); Shin, Kwang Hee, Suseong-gu (KR); You, Su Nam, Hwaseong-si (KR); Lee, Jin Woon, Seongnam-si (KR); Jo, Ho Yong, Yongin-si (KR)
(74) Representative: Ter Meer Steinmeister & Partner

(57) **Abstract**

Disclosed is a lithium recovery system for black mass, including: a heat treatment unit that performs heat treatment to convert the black mass into soluble substances and insoluble substances; a water leaching unit that leaches the heat-treated black mass with water to separate the heat-treated black mass into a water leaching solution, which contains lithium ions and carbonate ions, and insoluble substances; and an impurity removal unit that removes impurities contained in the water leaching solution by lowering pH of the water leaching solution through addition of carbon dioxide-containing gas to the water leaching solution.

## Description

The present application claims priority to Korean Patent Application No. 10-2023-0161085, filed November 20, 2023.

### BACKGROUND OF THE INVENTION

### Field of the Invention

The disclosure relates to a system for recovering lithium from black mass, and more particularly to a lithium recovery system for black mass to recover high purity lithium by removing impurities present in the black mass.

### Description of the Related Art

In general, black mass refers to scraps, i.e., waste generated during a battery manufacturing process, or powder obtained by collecting and pulverizing waste batteries.

The black mass contains various impurities because it contains not only cathode materials but also anode materials, binders, and electrolytes. Specifically, the black mass may contain various metals such as aluminum (Al), copper (Cu), iron (Fe), and fluorine (F). In particular, the black mass contains a large amount of aluminum (Al), which is a substrate material, and a large amount of fluorine (F), which is contained in the electrolytes and the binders. Because these impurities have an adverse effect on the purity of lithium carbonate or lithium hydroxide, an impurity removal process is required in a lithium recovery process in order to recover high purity lithium from the black mass.

### SUMMARY OF THE INVENTION

An object of the disclosure is to provide a lithium recovery system for black mass to recover high purity lithium by removing impurities present in the black mass.

Technical problems to be solved in the disclosure are not limited to the forementioned technical problems, and other unmentioned technical problems can be clearly understood from the following description by a person having ordinary knowledge in the art to which the disclosure pertains.

The object is solved by the features of the indeodent claims. Preferred embodiments are given in the dependent claims.

According to an embodiment of the disclosure, there is provided a lithium recovery system for black mass, including: a heat treatment unit that performs heat treatment to convert the black mass into soluble substances and insoluble substances; a water leaching unit that leaches the heat-treated black mass with water to separate the heat-treated black mass into a water leaching solution, which contains lithium ions and carbonate ions, and insoluble substances; and an impurity removal unit that removes impurities contained in the water leaching solution by lowering pH of the water leaching solution through addition of carbon dioxide-containing gas to the water leaching solution.

In one or more embodiments, aluminum ions may be precipitated in the impurity removal unit.

In one or more embodiments, calcium hydroxide (Ca(OH)₂) may be supplied to the impurity removal unit, and react with fluoride ions to precipitate calcium fluoride (CaF₂).

In one or more embodiments, the carbon dioxide-containing gas may be supplied continuously or intermittently to maintain the pH of the water leaching solution below 8 in the impurity removal unit.

In one or more embodiments, the pH of the water leaching solution in the impurity removal unit may be maintained at 6 or more and 7 or less.

In one or more embodiments, the carbon dioxide-containing gas may be derived from exhaust gas discharged after combustion in the heat treatment unit.

In one or more embodiments, the exhaust gas may be supplied to the water leaching solution after passing through a dust collector.

In one or more embodiments, a molar concentration of calcium hydroxide supplied to the impurity removal unit may be 1.2 to 2 times a molar concentration of fluoride ions in the water leaching solution separated from the water leaching unit.

In one or more embodiments, the lithium recovery system may further include: a reverse osmosis (RO) concentration unit that concentrates the water leaching solution, from which impurities have been removed in the impurity removal unit, using reverse osmosis.

In one or more embodiments, the lithium recovery system may further include: a crystallization unit that crystallizes lithium carbonate by raising temperature of concentrated water concentrated in the RO concentration unit.

In one or more embodiments, the RO concentration unit may include a first RO device and a second RO device.

In one or more embodiments the reverse osmosis may be performed in either one of the first RO device and the second RO device, while flushing may be concurrently performed in the other one.

In one or more embodiments, treated water used for the reverse osmosis in the RO concentration unit may be supplied to the water leaching unit.

In one or more embodiments, a crystallization filtrate non-crystallized in the crystallization unit may join the water leaching solution, from which impurities have been removed in the impurity removal unit, and be then supplied to the RO concentration unit.

In one or more embodiments, the lithium recovery system may further include a heat exchange unit that exchanges heat between the crystallization filtrate and the concentrated water.

In one or more embodiments, the lithium recovery system may further include a separation unit that separates lithium carbonate crystallized in the crystallization unit and the crystallization filtrate into solid and liquid.

In one or more embodiments, a main channel may be provided through which the crystallization filtrate flows from the separation unit to a confluence for joining the water leaching solution.

In one or more embodiments, a bypass channel may be provided which is branched from the main channel.

In one or more embodiments,an ion exchange resin may be provided in the bypass channel.

According to another embodiment of the disclosure, there is provided a lithium recovery method for black mass, including: a heat treatment process of performing heat treatment to convert the black mass into soluble substances and insoluble substances; a water leaching process of leaching the heat-treated black mass with water to separate the heat-treated black mass into a water leaching solution, which contains lithium ions and carbonate ions, and insoluble substances; and an impurity removal process of supplying carbon dioxide-containing gas to the water leaching solution to lower pH of the water leaching solution, wherein aluminum ions or fluoride ions contained in the water leaching solution may be removed by the impurity removal process.

In one or more embodiments, carbon dioxide-containing gas may be supplied to the water leaching solution in order to lower the pH of the water leaching solution and remove the impurities, in particular, aluminum ions and fluoride ions, contained in the water leaching solution, thereby recovering high purity lithium from the black mass.

In one or more embodiments, the RO concentration method is used to concentrate the water leaching solution, thereby lowering energy consumption and improving a recovery rate of lithium. In particular, aluminum ions and fluoride ions are removed in advance.

Preferably, the concentration of aluminum ions is lowered to 1 ppm or less and the concentration of fluoride ions is lowered to 10 ppm or less, thereby using the RO concentration method without making scaling issues.

Further, the RO concentration unit may include the first RO device and the second RO device, which are alternately operated, thereby preventing the scaling of the RO membrane.

Further, the pH of the water leaching solution is lowered as described above to increase the concentration multiple in the RO concentration unit, thereby preventing the scaling of the RO membrane.

Further, the heat exchange unit where heat exchange occurs between the crystallization filtrate and the concentrated water is provided so that the crystallization filtrate can be cooled to meet the required temperature conditions before entering the RO concentration unit, and the concentrated water can be heated to reduce the energy required for the crystallization.

Further, at least some of the crystallization filtrate passes through the ion exchange resin and then flows into the RO concentration unit, thereby suppressing the increase in impurities due to the reuse.

It should be understood that the effects of the disclosure are not limited to the foregoing effects but include all effects inferable from the configuration of the disclosure described in the detailed description or appended claims.

### BRIEF DESCRIPTION OF THE DRAWINGS

FIG. 1 a diagram showing the configuration of a lithium recovery system for black mass of a first embodiment;
FIG. 2 a diagram showing the detailed configuration of a reverse osmosis (RO) concentration unit in FIG. 1;
FIG. 3 a diagram for the configuration of a lithium recovery system for black mass of a second embodiment.

### DETAILED DESCRIPTION OF THE INVENTION

Below, embodiments of a system and method for recovering lithium from black mass according to the disclosure will be described with reference to the accompanying drawings.

The terms to be described later are terms defined in consideration of the functions in the disclosure, and may be changed according to users, intentions of the operators, or customs. The following embodiments do not limit the scope of the disclosure, but are merely illustrative of the features disclosed in the appended claims.

For the clear description of the disclosure, elements unrelated to the description are omitted, and like numerals refer to like elements throughout the specification. Throughout the specification, when a certain part is referred to as "including" a certain element, this indicates that additional elements are not excluded but may be additionally included unless specifically stated otherwise.

In the disclosure, an element referred to as a "unit" may represent two or more elements integrated into one or one element divided into multiple elements according to subdivided functions. In addition, each element described later may perform some or all functions of another element in addition to its main functions, and some main functions of each element may be entirely performed by another element.

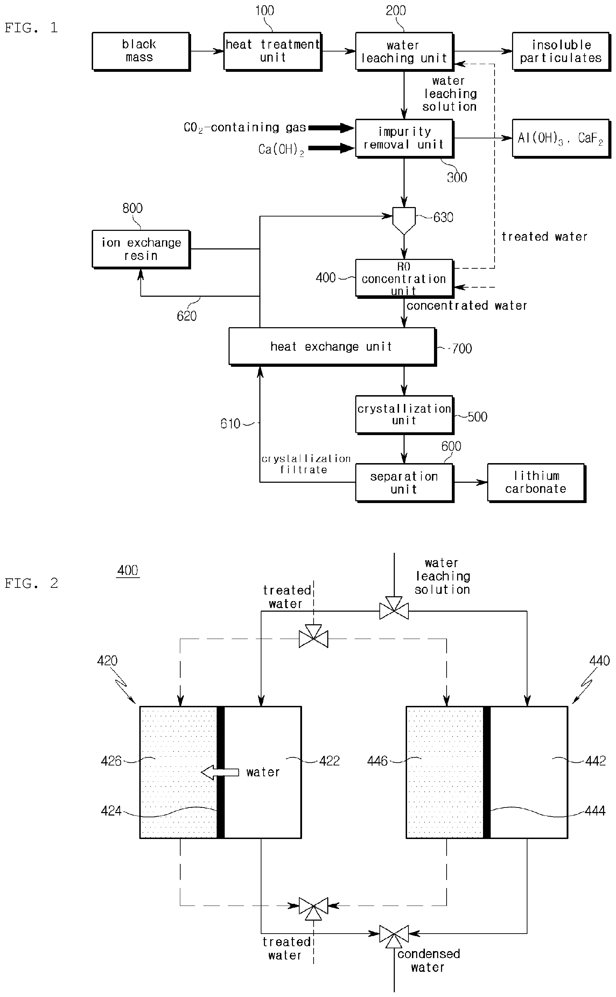

First, a lithium recovery system for black mass of a first embodiment is described with reference to FIGS. 1 and 2.

The lithium recovery system may include a heat treatment unit 100, a water leaching unit 200, an impurity removal unit 300, a reverse osmosis (RO) concentration unit 400, a crystallization unit 500, a separation unit 600, a heat exchange unit 700, and an ion exchange resin 800.

The heat treatment unit 100 performs heat treatment to convert the black mass into soluble substances and insoluble substances. Here, the black mass refers to scraps, such as waste generated during a battery manufacturing process, and/or powder obtained by collecting and pulverizing waste batteries.

By subjecting heat treatment to the black mass, soluble materials such as lithium carbonate (Li₂CO₃), lithium oxide (Li₂O), lithium hydroxide (LiOH), etc. may be generated, while insoluble materials Ni, Co, Mn oxides, etc. may be generated. The content of each ingredient may vary depending on heat treatment methods and conditions. Further, the black mass contains various impurities because it contains not only cathode materials but also anode materials, binders and electrolytes. In particular, the black mass contains a large amount of aluminum (Al), which is a substrate material, and a large amount of fluorine (F), which is contained in the electrolytes and the binders.

The heat treatment unit 100 may include, for example, a heat treatment furnace, and may combust hydrocarbon fluid inside the heat treatment furnace. The interior of the heat treatment furnace is heated by the combustion of the hydrocarbon fluid, creating a carbon dioxide atmosphere due to the carbon dioxide present in the exhaust gas generated by this combustion of the hydrocarbon fluid. Thus, carbon dioxide in the exhaust gas may react with the black mass introduced into the heat treatment furnace. However, without limitations, carbon dioxide gas may be separately injected into the heat treatment furnace.

The water leaching unit 200 leaches the heat-treated black mass with water to separate the heat-treated black mass into a water leaching solution, which contains lithium ions and carbonate ions, and insoluble particulates. In other words, soluble substances leach from the heat-treated black mass as they dissolve in water. Distilled water may be used in the leaching process.

The water leaching unit 200 may include a container, a water inlet, a water outlet and an insoluble separating filter.

The water to leach the heat-treated black mass may be provided through the water inlet into the container. The water leaching solution may be discharged through the water outlet from the container. The insoluble may be separated from the water leaching solution using the insoluble separating filter.

The concentration of lithium ions in the water leaching solution separated from the water leaching unit 200 may be 2,000 ppm or less because the maximum amount of lithium is eluted when the concentration of lithium ions is less than 2,000 ppm. The concentration of lithium ions in the water leaching solution may vary depending on a weight ratio of water and the heat-treated black mass subjected to the water-based leaching in the water leaching unit 200.

The separated water leaching solution is supplied to the RO concentration unit 400 via the impurity removal unit 300.

According to the disclosure, carbon dioxide-containing gas may be supplied to the water leaching solution in the impurity removal unit 300 in order to lower the pH of the water leaching solution. Thus, impurities contained in the water leaching solution are removed in the impurity removal unit 300.

The RO concentration unit 400 may include a container, a water inlet, a water outlet, a gas inlet, and an impurity separating filter.

The water leaching solution may be provided through the water inlet into the container. The water leaching solution, from which the impurities are removed, may be discharged from the container. The impurities may be separated from the water leaching solution using the impurity separating filter. The carbon dioxide-containing gas may be supplied to the water leaching solution through the gas inlet.

In general, the pH of the water leaching solution separated from the water leaching unit 200 is 10 to 11. However, the carbon dioxide-containing gas is supplied continuously or intermittently in the impurity removal unit 300 to maintain the pH of the water leaching solution at 8 or below. In particular, the pH of the water leaching solution is preferably maintained at 6 or more and 7 or less in the impurity removal unit 300.

Specifically, in the impurity removal unit 300, aluminum ions are precipitated and removed as the pH of the water leaching solution decreases. The solubility of aluminum tends to decrease from pH 11 toward pH 6. Therefore, when the pH of the water leaching solution is lowered, in particular, to a range of pH 6 to 7, the solubility of aluminum is significantly decreased, causing aluminum ions to precipitate as aluminum hydroxide (Al(OH)₃). This process effectively removes aluminum ions from the water leaching solution. In general, the concentration of aluminum ions in the water leaching solution separated from the water leaching unit 200 is initially 5 to 10 ppm. However, when the pH of the water leaching solution is lowered to a range of 6.5 to 8 in the impurity removal unit 300, the concentration of aluminum ions decreases to less than 1 ppm.

Further, calcium hydroxide (Ca(OH)₂) also may be supplied to the impurity removal unit 300. Consequently, calcium hydroxide reacts with fluoride ions to precipitate calcium fluoride (CaF₂), thereby enabling the removal of fluoride ions from the water leaching solution.

When the pH of the water leaching solution is 8 to 11, a reaction between calcium hydroxide and carbonate ions (Reaction Formula (1)) is superior to a reaction between calcium hydroxide and fluoride ions (Reaction Formula (2)). Therefore, calcium carbonate precipitates, and fluoride ions are not removed.

Reaction Formula (1) ----- Ca(OH)₂+CO₃²⁻ → CaCO₃ + 2OH⁻

Reaction Formula (2) ----- Ca(OH)₂+2F⁻ → CaF₂ + 2OH⁻

However, when the pH of the water leaching solution is lowered to 8 or less, a precipitation amount of calcium carbonate decreases as carbonate ions dissolved in water are converted to bicarbonate ions. This shift favors the reaction between calcium hydroxide and fluoride ions (Reaction Formula (2)), thereby effectively enhancing the removal of fluoride ions.

In particular, when the pH of the water leaching solution is below 7, the formation of calcium fluoride is most likely to occur. When the pH is 7 to 8, calcium carbonate may precipitate along with the formation of calcium fluoride. In this case, hydroxide ions are generated based on Reaction Formula (2), increasing the pH of the water leaching solution. To maintain the pH of the water leaching solution below 8, carbon dioxide-containing gas is supplied continuously or intermittently even while impurities are being removed.

In the water leaching solution separated from the water leaching unit 200, the molar concentration of calcium hydroxide supplied to the impurity removal unit 300 may be 1.2 to 2 times the molar concentration of fluoride ions. When the pH of the water leaching solution is lowered to 7 or less in the impurity removal unit 300, there is no significant difference in the removal of fluoride ions regardless of whether the molar concentration of calcium hydroxide is 1.2 or 2 times the molar concentration of fluoride ions. However, when the pH of the water leaching solution is between 7 to 8 in the impurity removal unit 300, some calcium ions may react with carbonate ions. Therefore, it is preferable to supply calcium hydroxide at a molar concentration that is 2 times that of the fluoride ions.

Meanwhile, in general, the concentration of fluoride ions in the water leaching solution separated from the water leaching unit 200 is about 300 ppm. The extent to which fluoride ions can be removed varies depending on the pH of the water leaching solution. Specifically, the concentration of fluoride ions can be lowered up to about 20 ppm when the pH of the water leaching solution is 6.8, and to 10 ppm or lower at pH of 6.5 or lower. As the pH decreases, the solubility of calcium hydroxide (Ca(OH)₂) increases, leading to a higher concentration of calcium ions in the water leaching solution. According to the equation Ksp=[Ca][F]₂ for the reaction CaF₂ - Ca+F, the concentration of fluoride ions decreases as the concentration of calcium ions increases, reaching an equilibrium state.

In addition, when the reaction is performed at pH of 6.5, the concentration of fluoride ions may be lowered to 10 ppm or less, but the concentration of dissolved calcium ions may increase to 100 ppm or more. Therefore, to lower the concentration of dissolved calcium ions to below 5 ppm, additional calcium hydroxide can be added to raise the pH to 7.5 or higher after filtering and removing calcium fluoride (CaF₂).

In this way, impurities, specifically aluminum ions and fluoride ions, are removed from the water leaching solution by supplying carbon dioxide-containing gas to the water leaching solution to lower the pH of the water leaching solution. This process yields a clean lithium carbonate aqueous solution. Ultimately, high purity lithium is recovered from the black mass.

The RO concentration unit 400 concentrates the water leaching solution, from which impurities have been removed by the impurity removal unit 300, using reverse osmosis (RO). As shown in FIG. 2, the RO concentration unit 400 according to this embodiment includes a first RO device 420 and a second RO device 440. These devices are alternately operated to prevent scaling of an RO membrane.

Specifically, the first RO device 420 includes a first concentration chamber 422 to which the water leaching solution is supplied, a first treatment chamber 426 to which treated water is collected, and a first RO membrane 424 positioned between the first concentration chamber 422 and the first treatment chamber 426.

Although not shown, the first RO device 420 may further include a pressurization device for pressurizing the water leaching solution in the first concentration chamber 422.

As the water leaching solution is pressurized by the pressurization device after the water leaching solution is supplied to the first concentration chamber 422 and the treated water is supplied to the first treatment chamber 426, water in the first concentration chamber 422 moves to the first treatment chamber 426 through the first RO membrane 424, thereby concentrating the water leaching solution in the first concentration chamber 422. The treated water may be distilled water.

Similarly, the second RO device 440 includes a second concentration chamber 442 to which the water leaching solution is supplied, a second treatment chamber 446 to which treated water is collected, and a second RO membrane 444 positioned between the second concentration chamber 442 and the second treatment chamber 446. Although not shown, the second RO device 440 further includes a pressurization device for pressurizing the water leaching solution in the second concentration chamber 442.

In this case, while the reverse osmosis is performed in one of the two RO devices, either the first RO device 420 or the second RO device 440, flushing is concurrently conducted in the other device. In other words, when the reverse osmosis is performed with the water leaching solution in the first RO device 420, pure water or a flushing agent, not the water leaching solution, is supplied to the second RO device 440 to flush its RO membrane. The reverse osmosis process and the flushing process for the first RO device 420 and the second RO device 440 are performed alternately. This alternating operation ensures that that metals and other impurities attached to the surface of the RO membranes are periodically cleaned, effectively preventing scaling.

Furthermore, lowering the pH of the water leaching solution in the impurity removal unit 300 increases the solubility of lithium, which enhances the concentration efficiency in the RO concentration unit 400 and helps prevent scaling of the RO membrane. When the pH of the water leaching solution is high, the solubility of lithium is low, which limits the final concentration achievable in the RO concentration unit 400 due to scaling issues. In other words, as the pH of the water leaching solution decreases, the final concentration achievable in the RO concentration unit 400 increases, thus improving the efficiency of the RO concentration process.

Specifically, lowering the pH of the water leaching solution increases the solubility of lithium carbonate - approximately 13 g/L at 20°C - by more than two times, allowing for more than a two-fold concentration of the water leaching solution in the RO concentration unit 400. This process results in a high concentration lithium aqueous solution and consumes less energy compared to evaporation concentration.

According to an embodiment, the treated water used for the reverse osmosis in the RO concentration unit 400 may be redirected back to the water leaching unit 200 and used for the water-based leaching. Therefore, the amount of water additionally supplied for the water-based leaching is reduced.

Then, a crystallization unit 500 crystallizes lithium carbonate by raising the temperature of concentrated water concentrated in the RO concentration unit 400. The crystallization unit 500 may crystallize lithium carbonate by heating the concentrated water at about 60°C to 80°C. The crystallization unit 500 may include a container to contain the concentrated water and a heater to supply a heat to the concentrated water.

The separation unit 600 separates lithium carbonate crystallized in the crystallization unit 500 from a non-crystallized crystallization filtrate, dividing them into solid and liquid components. To recover the lithium ions in the crystallization filtrate, this crystallization filtrate can be combined with the water leaching solution - after impurities have been removed by the impurity removal unit 300 - and then supplied to the RO concentration unit 400. To this end, a main channel 610 may be provided to direct the crystallization filtrate flows from the separation unit 600 to a confluence 630, where it is mixed with the water leaching solution.

In general, a temperature of 40°C or lower is allowed in the RO concentration unit 400, and thus a high-temperature crystallization filtrate needs to be cooled to 40°C or lower before entering the RO concentration unit 400. According to an embodiment, the crystallization filtrate may be cooled using the concentrated water. To this end, a heat exchange unit 700 may be further provided to exchange heat between the crystallization filtrate and the concentrated water. The heat exchange unit 700 may include a container and multiple tubes arranged within in the container. The heat exchange may be performed while the concentrated water is contained in the container and the crystallization filtrate flows within the tubes or while the crystallization filtrate is contained in the container and the concentrate water flows within the tubes.

For example, the temperature of the crystallization filtrate separated in the separation unit 600 is about 80°C, and the temperature of the concentrated water discharged from the RO concentration unit 400 is about 20°C. As heat is exchanged between the crystallization filtrate and the concentrated water in the heat exchange unit 700, heat may be transferred from the crystallization filtrate to the concentrated water. Accordingly, the temperature of the crystallization filtrate is lowered to meet the temperature conditions required for entering the RO concentration unit 400, and the temperature of the concentrated water is raised to reduce energy costs required for later crystallization. For example, the temperature of the crystallization filtrate is lowered from about 80°C to 20°C, and the temperature of the concentrated water is raised from about 20°C to 70°C.

According to an embodiment, a bypass channel 620 is provided, branching from the main channel 610, with an ion exchange resin 800 within the bypass channel 620. The bypass channel 620 may either rejoin the main channel 610, or join the water leaching solution at the confluence 630.

At least a portion, preferably 10% to 30%, of the crystallization filtrate separated in the separation unit 600, is redirected through the bypass channel 620 and treated with the ion exchange resin 800. This configuration helps to mitigate the increase in impurities resulting from the reuse of the crystallization filtrate. As the number of reuses of the crystallization filtrate increases, the concentration of ionic impurities (for example, calcium ions, magnesium ions, etc.) in the crystallization filtrate increases. Treating some of the crystallization filtrate with a weakly acidic cation exchange resin before reuse effectively controls and reduces the concentration of these impurities.

According to an embodiment, a lithium hydroxide aqueous solution may be prepared by reacting crystallized lithium carbonate with hydroxide salts (for example, calcium hydroxide, sodium hydroxide, barium hydroxide, etc.), and then lithium hydroxide (LiOH) may be produced by evaporative concentrated crystallization or ethanol mixed crystallization.

Further, according to an embodiment, lithium hydroxide (LiOH) may be produced through the evaporative concentrated crystallization or ethanol mixed crystallization by reacting the concentrated water and hydroxide salt to form a lithium hydroxide aqueous solution, without crystallizing lithium carbonate in the crystallization unit 500 following the RO concentration unit 400.

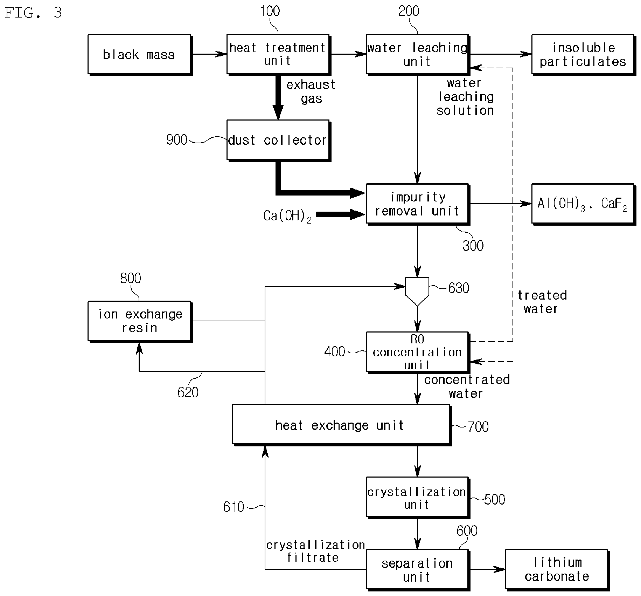

Next, a lithium recovery system for black mass according to a second embodiment of the disclosure will be described with reference to FIG. 3.

The lithium recovery system according to the second embodiment has the same configuration as that shown in FIG. 1, except that carbon dioxide-containing gas supplied to the impurity removal unit 300 is derived from the exhaust gas discharged after combustion in the heat treatment unit 100. In other words, when a hydrocarbon fluid is burned in the heat treatment furnace of the heat treatment unit 100, the exhaust gas discharged from the heat treatment unit 100 contains carbon dioxide. Therefore, there is no need of separately supplying the carbon dioxide-containing gas by using carbon dioxide in the exhaust gas.

Also, according to an embodiment, the exhaust gas may be supplied to the water leaching solution after passing through a dust collector 900. The dust collector 900 may be separately installed between the heat treatment unit 100 and the impurity removal unit 300. Alternatively, dust collector already installed inside the heat treatment unit 100 may be used.

Lastly, a lithium recovery method for black mass according to the disclosure will be described. The lithium recovery method for black mass may include steps performed with respect to the lithium recovery system as described above.

Specifically, the lithium recovery method according to the disclosure includes a heat treatment process of performing heat treatment to convert the black mass into soluble substances and insoluble substances; a water leaching process of leaching the heat-treated black mass with water to separate the heat-treated black mass into a water leaching solution, which contains lithium ions and carbonate ions, and insoluble substances; and an impurity removal process of lowering pH by supplying carbon dioxide-containing gas to the water leaching solution. In this case, as described above, fluoride ions or aluminum ions contained in the water leaching solution may be removed through the impurity removal process. In additional, the lithium recovery method may further include an RO concentration process, crystallization process, a separation process, a heat exchange process, and a resin ion exchange process.

The disclosure is not limited to the foregoing exemplary embodiments and descriptions, and various modifications can be made by anyone having ordinary knowledge in the art to which the disclosure pertains without departing from the subject matters of the discl

osure as claimed in the appended claims. Such modifications fall within the scope of the disclosure. Also, it is noted that any one feature of an embodiment of the present disclosure described in the specification may be applied to another embodiment of the present disclosure. Similarly, the present invention encompasses any embodiment that combines features of one embodiment and features of another embodiment.

### DESCRIPTION OF REFERENCE NUMERALS

100: heat treatment unit
200: water leaching unit
300: impurity removal unit
400: RO concentration unit
420: first RO device
422: first concentration chamber
424: first RO membrane
426: first treatment chamber
440: second RO device
442: second concentration chamber
444: second RO membrane
446: second treatment chamber
500: crystallization unit
600: separation unit
610: main channel
620: bypass channel
630: confluence
700: heat exchange unit
800: ion exchange resin
900: dust collector

## Claims

1. A lithium recovery system for black mass, comprising:
a heat treatment unit (100) configured to perform heat treatment to convert the black mass into soluble substances and insoluble substances;
a water leaching unit (200) configured to leach the heat-treated black mass with water to separate heat-treated black mass into a water leaching solution, which contains lithium ions and carbonate ions, and insoluble substances; and
an impurity removal unit (300) configured to remove impurities contained in the water leaching solution by lowering pH of the water leaching solution through addition of carbon dioxide-containing gas to the water leaching solution.

2. The lithium recovery system of claim 1, wherein aluminum ions are precipitated in the impurity removal unit (300).

3. The lithium recovery system of claim 1 or 2, wherein calcium hydroxide (Ca(OH)₂) is supplied to the impurity removal unit (300), and reacts with fluoride ions to precipitate calcium fluoride (CaF₂).

4. The lithium recovery system of any one of the preceding claims, wherein the carbon dioxide-containing gas is supplied continuously or intermittently to maintain the pH of the water leaching solution below 8 in the impurity removal unit (300), preferably the pH of the water leaching solution in the impurity removal unit is maintained at 6 or more and 7 or less.

5. The lithium recovery system of any one of the preceding claims, wherein the carbon dioxide-containing gas is derived from exhaust gas discharged after combustion in the heat treatment unit (100), preferably the exhaust gas is supplied to the water leaching solution after passing through a dust collector (900).

6. The lithium recovery system of any one of the preceding claims, wherein a molar concentration of calcium hydroxide supplied to the impurity removal unit (300) is 1.2 to 2 times a molar concentration of fluoride ions in the water leaching solution separated from the water leaching unit (200).

7. The lithium recovery system of any one of the preceding claims, further comprising a reverse osmosis (RO) concentration unit (400) configured to concentrate the water leaching solution, from which impurities have been removed in the impurity removal unit (300), using reverse osmosis.

8. The lithium recovery system of any one of the preceding claims, further comprising a crystallization unit (500) configured to crystallize lithium carbonate by raising temperature of concentrated water concentrated in the RO concentration unit (400).

9. The lithium recovery system of claim 7 or 8, wherein the RO concentration unit (400) comprises a first RO device (420) and a second RO device (440).

10. The lithium recovery system of claim 9, wherein the reverse osmosis is performed in either one of the first RO device (420) and the second RO device (440), while flushing is concurrently performed in the other one.

11. The lithium recovery system of claim 10, wherein treated water used for the reverse osmosis in the RO concentration unit is supplied to the water leaching unit.

12. The lithium recovery system of any one of the claims 8, 9, 10 or 11, wherein a crystallization filtrate non-crystallized in the crystallization unit (500) joins the water leaching solution, from which impurities have been removed in the impurity removal unit, and is then supplied to the RO concentration unit (400).

13. The lithium recovery system of claim 12, further comprising a heat exchange unit (700) configured to exchange heat between the crystallization filtrate and the concentrated water.

14. The lithium recovery system of claim 12 or 13, further comprising:
a separation unit (600) configured to separate lithium carbonate crystallized in the crystallization unit (500) and the crystallization filtrate into solid and liquid,
preferably a main channel (610) through which the crystallization filtrate flows from the separation unit (600) to a confluence for joining the water leaching solution, and a bypass channel (620) branched from the main channel (610) are provided, and wherein an ion exchange resin is provided in the bypass channel (620).

15. A lithium recovery method for black mass, comprising:
a heat treatment process of performing heat treatment to convert the black mass into soluble substances and insoluble substances;
a water leaching process of leaching the heat-treated black mass with water to separate the heat-treated black mass into a water leaching solution, which contains lithium ions and carbonate ions, and insoluble substances; and
an impurity removal process of supplying carbon dioxide-containing gas to the water leaching solution to lower pH of the water leaching solution,
wherein aluminum ions or fluoride ions contained in the water leaching solution may be removed by the impurity removal process.
